# EUROPEAN PATENT SPECIFICATION

(11) **EP 4 344 763 B1**
(45) Date of publication and mention of the grant of the patent: **01.07.2026**
(21) Application number: 22198744.9
(22) Date of filing: 29.09.2022
(51) Int. Cl.: B01D 46/24

(54) **FILTER ELEMENT AND FILTER SYSTEM**
FILTERELEMENT UND FILTERSYSTEM
ÉLÉMENT FILTRANT ET SYSTÈME DE FILTRE

(43) Date of publication of application: 03.04.2024
(73) Proprietor: MANN+HUMMEL GmbH, 71636 Ludwigsburg (DE)
(72) Inventor: EPLI, Sven, 74078 Heilbronn (DE); LINHART, Jochen, 71409 Schwaikheim (DE); WEINE, Jens, 74405 Gaildorf (DE); KELLER, Dr. Florian, 71640 Ludwigsburg (DE); KUSEBAUCH, Robert, 94405 Landau (DE); KIRSCHNER, Markus, 84546 Egglkofen (DE); PEREIRA DE OLIVEIRA, Daiane, 13339-545 Indaiatuba (BR); MIGUEL, Christiano Ferreira, 13.335-010 Indaiatuba (BR); DEMINOVCH, Alexandre, 13.328-047 Salto (BR); HIRAI, Rafael Hiroshi, 13.321-371 Salto (BR)
(74) Representative: Mann + Hummel Intellectual Property

(56) References cited:
- DE-A1- 102015 004 089
- US-A1- 2003 182 911
- US-A1- 2009 272 085
- US-A1- 2013 086 877
- US-A1- 2016 131 094
- US-A1- 2017 254 301
- US-A1- 2019 270 045
- AGRODOCTOR: "Luftfilter P533930 Donaldson", Retrieved from the Internet <URL:https://agrodoctor.eu/de/filter/99546-luftfilter-p533930-donaldson-.html> [retrieved on 20230215]

## Description

### Technical Field

The invention relates to a filter element, in particular an air filter element, and a filter system.

### Prior Art

EP 2 175 960 B1 discloses air cleaners. It particularly concerns air cleaners in which the main filter cartridge includes an open end with an internally directed radial seal thereat, and a closed end. One member of a projection/receiver arrangement is positioned on the first end cap. Another member is included in a housing, for securely supporting the main filter cartridge. A projection/receiver arrangement including first and second members is provided. One member of the projection/receiver arrangement is positioned on the access cover. It comprises a serpentine ring member, and can either be a ring projection or a ring shaped receiver groove. The member of the projection/receiver arrangement, which is positioned on the access cover, comprises a serpentine receiving groove. Another member of the projection/receiver arrangement is positioned on the outer end surface of the end cap. It is engageable with the access cover, in a defined manner. The first and second members of the projection/receiver arrangement are engaged to provide cantilevered support of the air filter cartridge at the second end. The first and second members of the projection/receiver arrangement are also engaged in a non-rotatable manner.

US 2013/086877 A1 discloses a secondary filter cartridge radially nested within and radially supported by a main filter cartridge. The secondary cartridge has a flexible multi-leg crown with slits which engage a receptacle of the main filter element for radial support and a central pin projection interior to the crown extending outwards to protect the crown from impact damage. The main filter cartridge bottom end disk has axially extending, spaced apart projections engaged into matching pockets or gaps provided between engaging inward projections on an interior end face of the filter housing, rotationally fixing or locking the filter housing and the main filter cartridge. The main filter cartridge includes an anti-rotation housing engagement member extending through a filter housing wall to the exterior indicating presence of a properly installed filter cartridge and rotatably locking position of the housing and main filter cartridge.

DE 10 2015 004 089 A1 discloses a filter housing for a filter system, with a first housing part and a second housing part that are designed to enclose a filter element, with at least one inlet and at least one outlet for a fluid in a housing wall. At least one of the housing parts has a centering contour for radially fixing and radially sealing a filter element in the inserted state, while the other of the housing parts has at least two radial guide contours which are arranged coaxially with respect to one another at different axial heights, so that alternatively at least two different filter elements having a different diameter and/or or different axial length can be inserted into the filter housing in such a way that the filter element inserted in each case is held in a defined manner in the radial direction and in the axial direction and its clean side is sealed with respect to its raw side. The invention also relates to a replaceable filter element for installation in a filter housing of this kind, and to a filter system which includes a filter housing and a filter element of this kind.

US 2003/182911 A1 discloses an improved filter element. In preferred form, the filter element includes first and second end caps, with media extending therebetween. The end caps are preferably formed from foamed polyurethane, and preferably there are no outer peripheral standoff indents provided in the end caps. Each end cap preferably includes a standoff ring, spaced from an outer perimeter, positioned therein. Preferred approaches to manufacturing such elements are provided.

US 2009/272085 A1 discloses a filter element, which includes a cylindrical media pack defining a central open volume and a longitudinal axis; a first end cap having a central aperture in flow communication with the central open volume; and a second, closed end cap having a central region closing an end of the media pack central, open volume. The closed end cap includes a projection extending axially outwardly therefrom and positioned at a location intersected by the longitudinal axis. An end cover for an air cleaner includes an inner side including a central projection thereon. Preferably, the central projection comprises a wall that includes an outer perimeter defining a regular polyhedron having at least five sides. An air cleaner comprises a cylindrical filter element having a first open end cap, a second closed end cap, and a cylindrical media pack extending therebetween.

The first end cap defines an internal radial seal region. The second, closed end cap has a central region including a circular recessed portion. The air cleaner also includes an end cover. The end cover includes an inner side including a central projection thereon. The central projection is sized and shaped to matably engage the recessed portion of the second closed end cap, when the filter element is operably installed in the end cover. Methods for installing a filter element in an air cleaner preferably will use constructions as described herein.

US 2016/131094 A1 discloses an air filter, including: an openable filter housing having an inlet for air to be cleaned, an outlet for cleaned air, a filter element exchangeably arranged with the filter housing. The filter element includes a filter medium radially surrounding and defining an interior space within the filter element and a support element secured to the filter element. The support element faces away from the filter medium and has a lateral support surface having a cylindrical section and/or a section with a cross section that changes in the direction of the element axis, whose main axis runs axially or parallel to the element axis and with which the support element is supported at least transversely to the element axis against a corresponding support section arranged on a side of the filter housing.

US 2017/254301 A1 discloses a fluid filtration systems which can be used for air filtration in an internal combustion engine. The US 2017/254301 A1 refers to a filtering device including a filtering element which presents an open axial end and an axial end closed by a cover; and an intake cover. The said cover includes at least a first tubular boss projecting towards the intake cover; and the intake cover includes at least a second tubular boss complementary to the first tubular boss and projecting towards the cover; the first tubular boss is slotted in the second tubular boss. The US 2017/254301 A1 also refers to a tubular filtering element and to a maintenance process of a filtering device.

US 2019/270045 A1 discloses a round filter element comprising a filter medium body with a wall to be flowed through by a fluid to be purified radially relative to a longitudinal axis of the filter medium body. The filter medium body has a longitudinally extending cross-sectional shape in a direction transverse to the longitudinal axis. The filter medium body has a first end face and a second end that are axially oppositely positioned relative to each other in a direction along the longitudinal axis of the filter medium body. A first end disk and a second end disk are arranged at the first and second end faces, respectively, and have the same cross-sectional shape. The filter medium body has a twist by being twisted about the longitudinal axis such that the axially oppositely positioned first and second end faces of the filter medium body are angularly displaced relative to each other.

### Disclosure of the Invention

It is an object of the invention to provide an improved filter element for a filter system which can be mounted in a housing easily and reproducibly.

Another object is to provide a filter system with such a filter element which can be mounted in the housing easily and reproducibly.

The object is achieved according to one aspect of the invention by a filter element, in particular an air filter element, comprising a filter media body surrounding a hollow interior and having a first end and an opposite second end, a first end cap positioned on the first end of the filter media body, the first end cap having a central air flow aperture therethrough, and a second end cap positioned on the second end of the filter media body, the second end cap being a closed end cap, wherein the second end cap comprises a plurality of spaced inner adapter projections thereon projecting in direction of a central axis away from the first end cap, wherein at least part of the inner adapter projections are positioned in a circular manner surrounding a center of the second end cap.

The other object is achieved by a filter system comprising a housing, a fluid inlet formed in a first housing part, a fluid outlet formed in the first housing part, the housing being closed by a second housing part, a serviceable filter element, the filter element having a first end and a second end, the second end being provided with inner adapter projections, and being operably accommodated in the housing, the inner adapter projections of the second end cap of the filter element projecting into a receiver arrangement on the second housing part in a manner providing support for the filter element at the second end.

The other claims, the description and the drawings describe advantageous embodiments of the invention.

According to one aspect of the invention, a filter element, in particular an air filter element, is proposed, comprising a filter media body surrounding a hollow interior and having a first end and an opposite second end, a first end cap positioned on the first end of the filter media body, the first end cap having a central air flow aperture therethrough, and a second end cap positioned on the second end of the filter media body, the second end cap being a closed end cap. The second end cap comprises a plurality of spaced inner adapter projections thereon projecting in direction of a central axis away from the first end cap, wherein at least part of the inner adapter projections are positioned in a circular manner surrounding a center of the second end cap.

A circumferential recessed contour as a receiver arrangement on the housing cover engages several positive contours as inner adapter projections from the filter element side, e.g. to realize an anti-rotation device or shoring protection. The bottom design with a rosette as the receiver arrangement may be necessary to assemble the filter element, most because of a blind assembly of the filter element in a truck vehicle.

Advantageously the filter element with the inner adapter projections may easily be mounted to the housing because the inner adapter projections may engage in a groove of a receiver arrangement in the housing cover. By changing from a typical continuous protruding contour to a number of smaller contours as inner adapter projections, arranged on a circular path, additional volume may be free for accommodating dirt in the housing. Thus, the space between the protrusions on the filter element may serve as dirt storage. There is more empty volume available in the groove of the housing cover due to the multiple projections on the end cap of the filter element. In this way, additional dirt can be absorbed or displaced in the necessary space. A better conduction of dirt particles towards the dust cap on the housing cover may be achieved, as the discrete contour of the inner adapter projections improves permeability in this area.

A positive side effect is that the fit to the receiver arrangement as an interface of the housing cover is improved. The reason for this is the higher number of small contours, which can be engaged more flexibly in the receiver arrangement. A better adaptation of the filter contour to the housing cover may advantageously be achieved.

According to a preferred embodiment, the second end cap includes a plurality of spaced outer adapter projections thereon positioned adjacent to an outer perimeter of the second end cap, the outer adapter projections each projecting in direction of the central axis away from the first end cap. The function of the inner adapter projections can be further optimized with a second circular cluster of protrusions as outer adapter projections on the second end cap of the filter element. These outer adapter projections may serve for further support of the second end cap when closing the housing with the mounted filter element by the housing cover.

It should be noted that in an alternative, converse embodiment the housing cover may be provided with spaced outer projections for further support of the second end cap of the filter element.

The filter element with the inner adapter projections can be used in a more flexible manner. It may be mounted in a filter system with one circulating groove on the housing cover, or with several grooves on the cover side. Advantageously there is more volume for dirt available, before assembly problems may occur.

The feature with the inner adapter projection is related with a receiver arrangement, e.g. a rosette design in the housing cover to assemble the round filter element in the housing of an air intake filter system. The first end cap may be manufactured from polyurethane (PUR) and the second end cap may be manufactured from plastics, e.g. PA or PP, as a hard component.

The robust design provides a strong assembly of the filter element in the housing and guarantees the correct assembly position in the air intake system.

At least a part of the inner adapter projections are configured as straight slabs having a longitudinal extension, a projection line in the longitudinal extension to the outer perimeter intersecting the outer perimeter. The straight slabs may be advantageous to be manufactured in the end cap and favorably engage in the receiver arrangement of the housing. Compared to a continuous contour, additional space for accommodation of dust is available and the amount of plastic material needed for forming the projections can be reduced.

The inner adapter projections are hollow, comprising an open end in the axial direction away from the first end cap. By this way the inner adapter projections may favorably be manufactured with standard injections molding.

According to an advantageous embodiment of the filter element, the inner adapter projections may be provided with a conical shape pointing radially inwards in the axial direction away from the first end cap. In other words, the projections taper towards their counterpart on the housing cover. This may favorably facilitate mounting of the filter element in the housing cover because of ease for engaging the inner adapter projections into the receiver arrangement.

According to an advantageous embodiment of the filter element, the inner adapter projections may be distributed equidistantly around the central axis. However, non-equidistant distribution is also possible. For example, the projections could be arranged only on half of a circle around the center of the end cap. Favorably the mounting of the filter element to the housing cover may be facilitated due to suitable arrangement of the inner adapter projections.

According to a special embodiment of the filter element, the inner adapter projections may be positioned in different radial distances from the center of the second end cap. This embodiment could be used in a housing with several receiver arrangements on different radial distances from the center of the corresponding housing part. Favorably the mounting of the filter element to the housing cover may be facilitated due to suitable arrangement of the inner adapter projections.

According to an advantageous embodiment of the filter element, an axial alignment ring may be positioned on the second end cap surrounding and radially spaced from the inner adapter projections. The alignment ring may serve as an additional alignment feature for mounting the filter element to the housing.

According to an advantageous embodiment of the filter element, the alignment ring may be connected to the outer adapter projections by radial struts. Thus the stiffness of the end cap may favorably be enhanced.

According to an advantageous embodiment of the filter element, a backside of the second end cap may be provided with a support structure, in particular a grid. Thus the stiffness of the end cap may favorably be enhanced.

According to another aspect of the invention, a filter system is proposed, comprising a housing with a fluid inlet formed in a first housing part and a fluid outlet formed in the first housing part, the housing being closed by a second housing part. The filter system further comprises a serviceable filter element, the filter element having a first end and a second end, the second end being provided with inner adapter projections, the filter element being operably accommodated in the housing, the inner adapter projections of the second end cap of the filter element projecting into a receiver arrangement on the second housing part in a manner providing support for the filter element at the second end.

A circumferential recessed contour as a receiver arrangement on the housing cover engages several positive contours as inner adapter projections from the filter element side, e.g. to realize an anti-rotation device or shoring protection. The bottom design with a rosette as the receiver arrangement may be necessary to assemble the filter element, most because of a blind assembly of the filter element in a truck vehicle.

Advantageously the filter element with the inner adapter projections may easily be mounted to the housing because the inner adapter projections may engage in a groove of a receiver arrangement in the housing cover. By changing from a typical continuous protruding contour to a number of smaller contours as inner adapter projections, arranged on a circular path, additional volume may be free for accommodating dirt in the housing. Thus the protrusions on the filter element may serve as dirt storage. There is more empty volume available in the groove of the housing cover due to the multiple projections on the end cap of the filter element. In this way, additional dirt can be absorbed or displaced in the necessary space. A better conduction of dirt towards the dust cap on the housing cover may be achieved, as the discrete contour of the inner adapter projections improves permeability in this area.

A positive side effect is that the fit to the receiver arrangement as an interface of the housing cover is improved. The reason for this is the higher number of small contours, which can be engaged more flexibly in the receiver arrangement. A better adaptation of the filter contour to the housing cover may advantageously be achieved.

The function of the inner adapter projections can be further optimized with a second circular cluster of protrusions as outer adapter projections on the second end cap of the filter element. The outer adapter projections can abut against an inner surface of the second housing part, especially the housing cover, and provide axial support.

The filter element with the inner adapter projections can be used more flexible. It may be mounted in a filter system with one circulating groove on the housing cover, or with several grooves on the cover side. Advantageously there is more volume for dirt available, before assembly problems may occur.

The feature with the inner adapter projections is related with a receiver arrangement, preferably a rosette design in the housing cover to assemble the filter element in the housing of filter system of an air intake system.

The robust design provides a strong assembly of the filter element in the housing and guarantees the correct assembly position in the air intake system.

According to an advantageous embodiment of the filter system, the receiver arrangement on the second housing part may be defined as a serpentine receiving groove in an inner surface of the second housing part. Thus the filter element with the inner adapter projections may favorably be mounted to the housing by engaging the discrete inner adapter projections in the receiving groove of the receiver arrangement of the housing.

According to an advantageous embodiment of the filter system, the serpentine receiving groove may be configured as a continuous groove. Thus the filter element with the inner adapter projections may favorably be mounted to the housing by engaging the discrete inner adapter projections in the continuous receiving groove of the receiver arrangement of the housing.

According to an alternative embodiment, the receiving groove may consist of several spaced sections. In a further alternative embodiment, the receiver arrangement can comprise several receiving pockets. Each pocket can receive one of the inner adapter projections. The shape of the pockets can correspond to the shape of the projections, e.g. rectangular projections may be formed on the end cap of the filter element and engage rectangular pockets in the second housing part of the filter housing.

Instead of one receiving groove, two or more receiving grooves could be arranged on the housing part. The end cap may then comprise several projection arrangements arranged in different radial distances to the center of the end cap.

The inner adapter projections may have different lengths in axial direction. The receiver arrangement may also have a corresponding axial abutment surface with different distances relative to a main plane of the opposing end cap of the filter element. In this way, the filter element can only be arranged in a defined position in the housing.

### Brief Description of the Drawings

The present invention together with the above-mentioned and other objects and advantages may best be understood from the following detailed description of the embodiments, but not restricted to the embodiments, wherein is shown in:
- Figure 1: in an isometric view a filter element according to an embodiment of the invention with a view on a first end cap;
- Figure 2: in an isometric view the filter element according to Figure 1 with a view on a second end cap;
- Figure 3: in a detailed isometric view the second end cap of the filter element of Figure 1 ;
- Figure 4: in a detailed isometric view the second end cap of the filter element of Figure 1 from a backside;
- Figure 5: in a detailed isometric view a second end cap of a filter element according to a further disclosed embodiment which does not belong to the invention;
- Figure 6: in a top view the second end cap according to Figure 5, which does not belong to the invention;
- Figure 7: in an exploded view a filter system with a filter element according to an embodiment of the invention;
- Figure 8: in a top view a second housing part of the filter system according to Figure 7 from an inside; and
- Figure 9: in an isometric view a receiver arrangement of the second housing part according to Figure 8.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

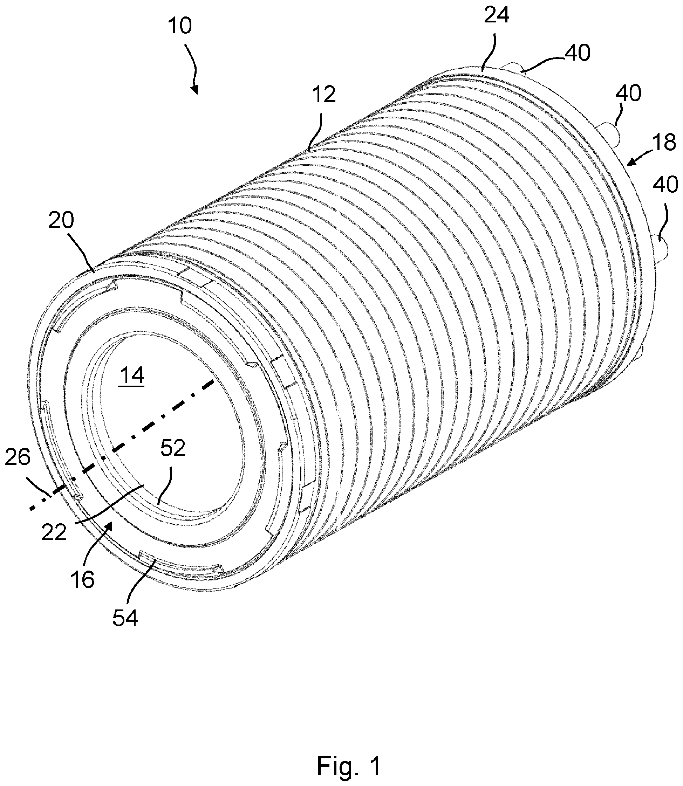

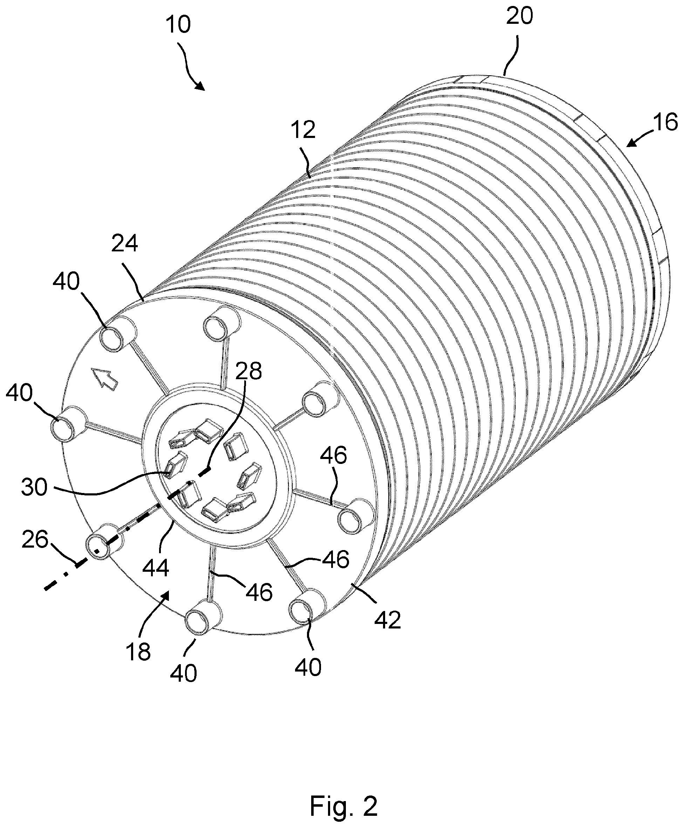

Figure 1 depicts in an isometric view of a filter element 10 according to an embodiment of the invention with a view on a first end cap 20, whereas in Figure 2 the filter element 10 is depicted with a view on a second end cap 24.

The filter element 10, in particular an air filter element, comprises a filter media body 12 surrounding a hollow interior 14 and having a first end 16 and an opposite second end 18. A first end cap 20 is positioned on the first end 16 of the filter media body 12. The first end cap 20 has a central air flow aperture 22 therethrough from the interior 14. The central air flow aperture 22 is configured with a radial housing seal 52 on an inner side for sealing a clean air side of the filter element 10 in the interior 14 from a raw air side when mounted in the housing.

The first end cap 20 further is configured with a number of support elements 54 surrounding a perimeter of the end cap 20 for fixing the filter element 10 when being mounted to a housing.

A second end cap 24 is positioned on the second end 18 of the filter media body 12, the second end cap 24 being a closed end cap. The second end cap 24 comprises a plurality of spaced inner adapter projections 30 thereon projecting in direction of a central axis 26 away from the first end cap 20. At least part of the inner adapter projections 30 are positioned in a circular manner surrounding a center 28 of the second end cap 24. Further the second end cap 24 includes a plurality of spaced outer adapter projections 40 thereon positioned adjacent to an outer perimeter 42 of the second end cap 24, the outer adapter projections 40 each projecting in direction of the central axis 26 away from the first end cap 20. These outer adapter projections 40 may serve for further support of the second end cap 24 when closing the housing 110 with the mounted filter element 10 by the housing cover 114.

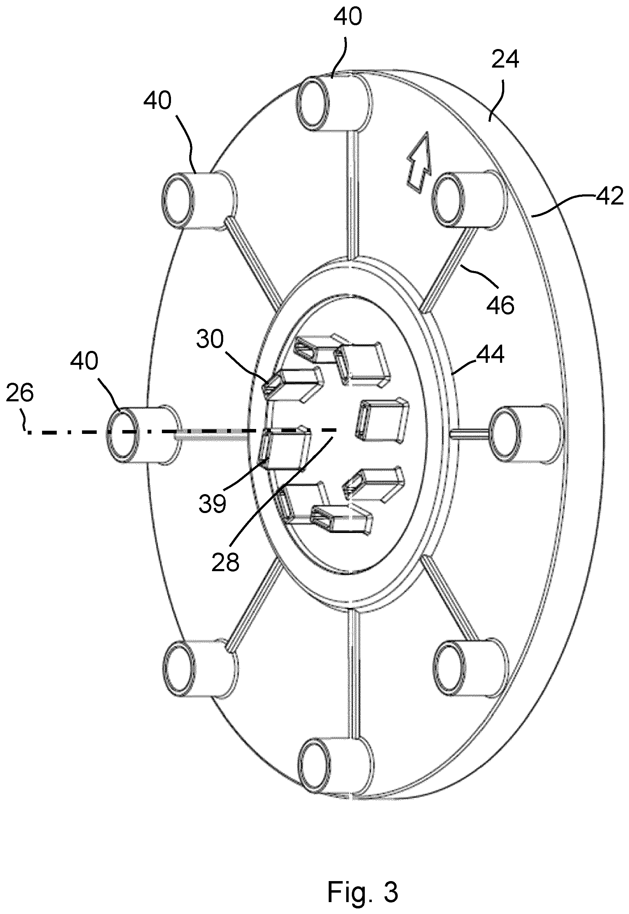

Figure 3 depicts the second end cap 24 of the filter element 10 in a detailed isometric view.

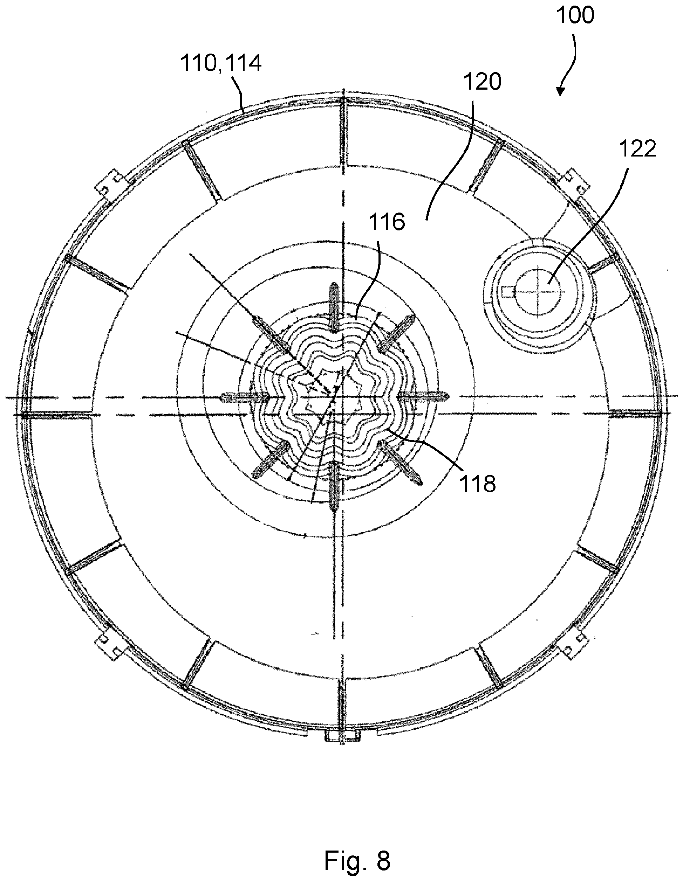

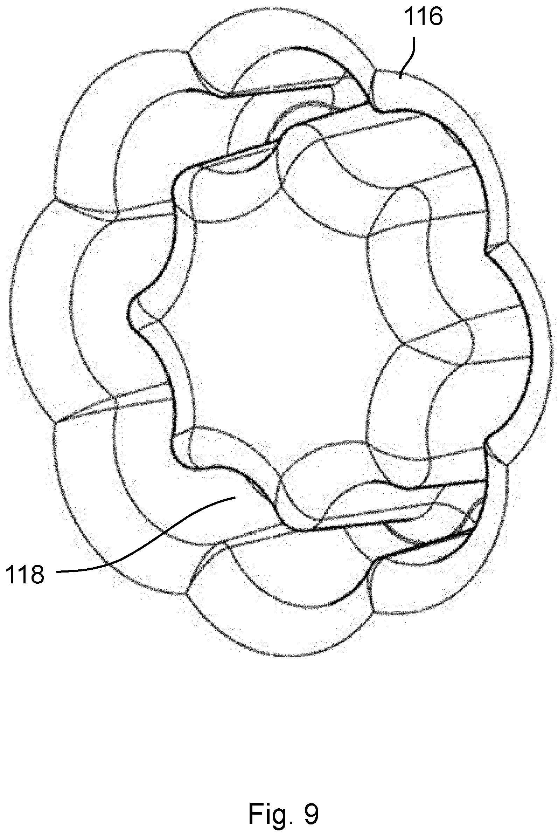

The inner adapter projections 30 are configured as straight slabs having a longitudinal extension, a projection line in the longitudinal extension to the outer perimeter 42 intersecting the outer perimeter 42. The straight slabs may be advantageous to be manufactured in the end cap 24 and favorably engage in the receiver arrangement 116 of the housing 110, as may be seen in Figures 8 and 9. Also additional space, compared to a continuous contour, for accommodation of dust is available.

The inner adapter projections 30 are hollow, comprising an open end 39 in the axial direction 26 away from the first end cap 20. By this way the inner adapter projections 30 may favorably be manufactured with standard injection molding tools.

The inner adapter projections 30 in the embodiment shown in the Figures are distributed equidistantly and positioned on a same radial distance around the central axis 26. In alternative embodiments inner adapter projections 30 may also be distributed non-equidistantly and/or non-symmetrically around the center 28. In the embodiment shown the rectangular adapter projections 30 are all arranged under the same angle, i.e. the angle between the straight outer surface of the projection 30 and the diameter of the circle is the same for all the projections 30. Alternatively, at least one of the projections 30, especially half of them, could be arranged with another angle, especially oriented in the opposite direction.

An axial alignment ring 44 is positioned on the second end cap 24 surrounding and being radially spaced from the inner adapter projections 30. The alignment ring 44 is connected to the outer adapter projections 40 by radial struts 46. The alignment ring 44 may serve as an additional alignment feature for mounting the filter element 10 to the housing 110. The stiffness of the end cap 24 may favorably be enhanced by the radial struts 46.

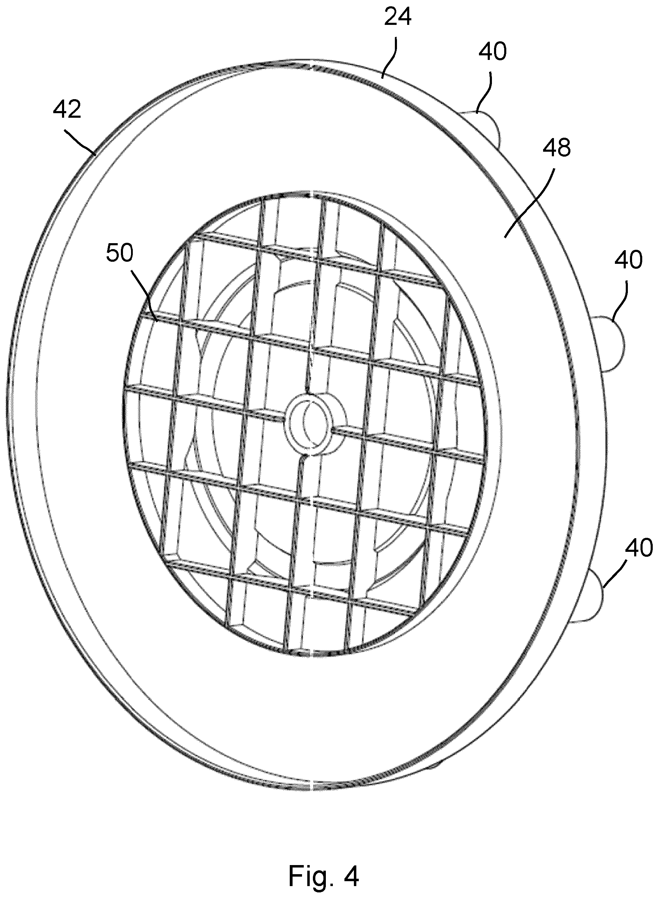

Figure 4 depicts the second end cap 24 of the filter element 10 from a backside. The backside 48 of the second end cap 24 is provided with a support structure 50, formed as a grid. Thus the stiffness of the end cap 24 may favorably be enhanced.

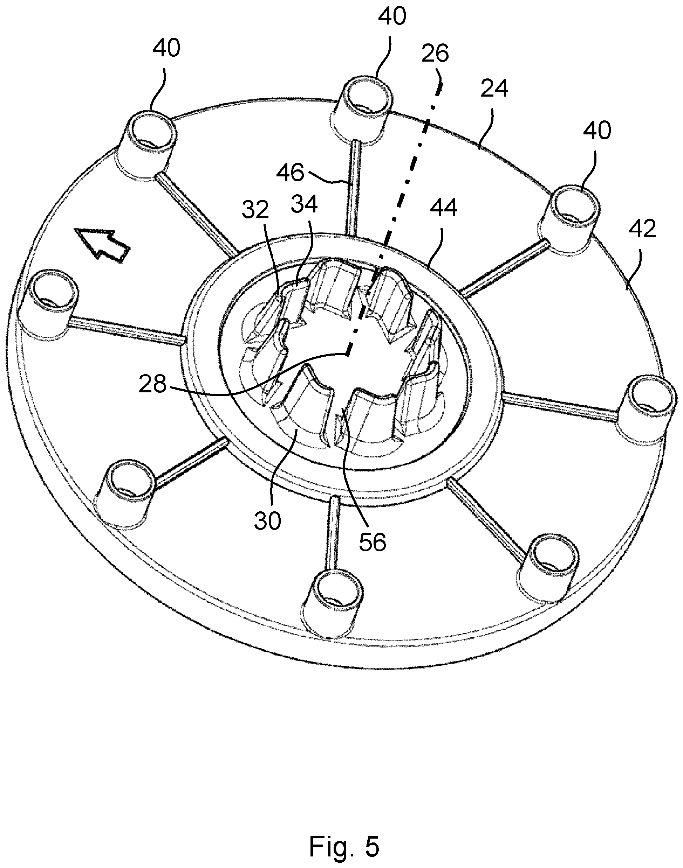

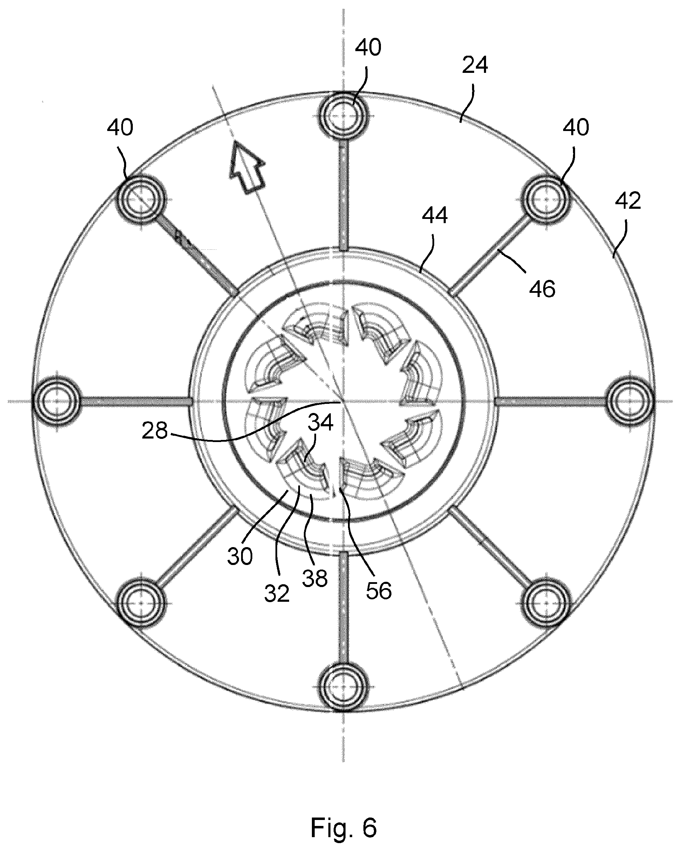

In Figure 5 a second end cap 24 of a filter element 10 which does not belong to the invention is depicted in a detailed isometric view, whereas in Figure 6 a top view of the second end cap 24 is shown.

Here, the inner adapter projections 30 are configured as curved slabs, comprising at least one arcuate section 32 and a straight section 34, the straight section 34 having a longitudinal extension, a projection line in the longitudinal extension to the outer perimeter 42 intersecting the outer perimeter 42. The at least one arcuate section 32 has a convex curved side wall 38 when seen from the outer perimeter 42. The curved slabs may be advantageous to engage in the rosette-like receiver arrangement 116 of the housing 110. Also additional space, compared to a continuous contour, for accommodation of dust is available. Thus a favorable engagement with the receiver arrangement 116 of the housing cover 114 may be possible.

Further, as may be seen particularly in Figure 5, the inner adapter projections 30 are provided with a conical shape pointing radially inwards in the axial direction 26 away from the first end cap 20. This may favorably facilitate mounting of the filter element 10 in the housing cover 114 because of ease for engaging the inner adapter projections 30 into the receiver arrangement 116.

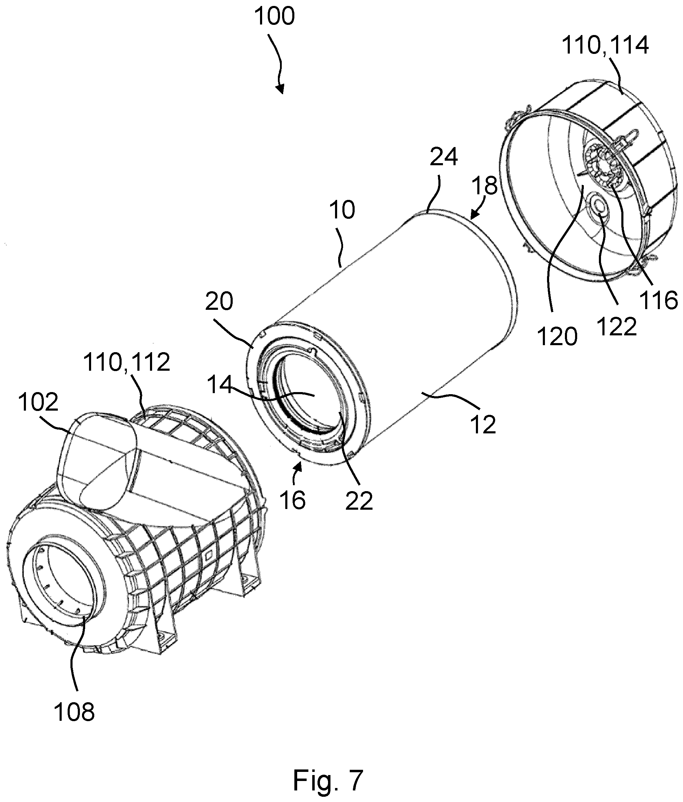

Figure 7 depicts in an exploded view a filter system 100 with a filter element 10 according to an embodiment of the invention.

The filter system 100 comprises a housing 110, a fluid inlet 102 formed in a first housing part 112, and a fluid outlet 108 also formed in the first housing part 112. The housing 110 is closed by a second housing part 114 as a housing cover.

The filter system 100 further comprises a serviceable filter element 10, which is operably accommodated in the housing 110.

The filter element 10 has a first end 16 and a second end 18. The second end 18 is provided with inner adapter projections 30. The inner adapter projections 30 of the second end cap 24 of the filter element 10 are projecting into a receiver arrangement 116 on the second housing part 114 in a manner providing support for the filter element 10 at the second end 18.

Figure 8 depicts in a top view the second housing part 114 as a housing cover of the filter system 100 from an inside, whereas in Figure 9 the receiver arrangement 116 of the second housing part 114 is shown.

The receiver arrangement 116 on the second housing part 114 is defined in a rosette-like manner as a serpentine receiving groove 118 in an inner surface 120 of the second housing part 114. The serpentine receiving groove 118 is configured as a continuous groove. Thus the filter element 10 with the inner adapter projections 30 may favorably be mounted to the second housing part 114 by engaging the discrete inner adapter projections 30 in the continuous receiving groove 118 of the receiver arrangement 116 of the second housing part 114. At least the edges of the inner adapter projections 30 abut against the wall of the receiving groove 118, thereby inhibiting a rotational movement of the filter element 10 relative to the housing 110. Hence, the sealing on the opposite end 16 of the filter element 10 is protected from friction due to rotational forces.

Figure 8 illustrates the dust cap 122. This dust cap 122 serves for removing dust being gathered in the open space between the second end cap 24 of the filter element 10 and the second housing part 114. Thus a better conduction of dirt towards the dust cap 122 on the housing cover 114 may be achieved, as the discrete contour of the inner adapter projections 30 improves permeability in this area.

### Reference numerals

- 10: filter element
- 12: filter media body
- 14: interior
- 16: first end
- 18: second end
- 20: first end cap
- 22: air flow aperture
- 24: second end cap
- 26: central axis
- 28: center
- 30: inner adapter projection
- 32: arcuate section
- 34: straight section
- 38: convex curved side wall
- 39: open end
- 40: outer adapter projection
- 42: perimeter
- 44: alignment ring
- 46: strut
- 48: backside
- 50: support structure
- 52: housing seal
- 54: support element
- 56: gap
- 100: filter system
- 102: fluid inlet
- 108: fluid outlet
- 110: housing
- 112: housing part
- 114: housing part
- 116: receiver arrangement
- 118: receiving groove
- 120: inner surface
- 122: dust cap

## Claims

1. A filter element (10), in particular an air filter element, comprising
a filter media body (12) surrounding a hollow interior (14) and having a first end (16) and an opposite second end (18),
a first end cap (20) positioned on the first end (16) of the filter media body (12), the first end cap (20) having a central air flow aperture (22) therethrough,
and
a second end cap (24) positioned on the second end (18) of the filter media body (12), the second end cap (24) being a closed end cap,
wherein the second end cap (24) comprises a plurality of spaced inner adapter projections (30) thereon projecting in direction of a central axis (26) away from the first end cap (20),
wherein at least part of the inner adapter projections (30) are positioned in a circular manner surrounding a center (28) of the second end cap (24), and
wherein the inner adapter projections (30) are hollow, comprising an open end (39) in the axial direction (26) away from the first end cap (20),
wherein at least a part of the inner adapter projections (30) are configured as straight slabs having a longitudinal extension, a projection line in the longitudinal extension to the outer perimeter (42) intersecting the outer perimeter (42).

2. The filter element according to any one of the preceding claims, wherein the inner adapter projections (30) are provided with a conical shape pointing radially inwards in the axial direction (26) away from the first end cap (20).

3. The filter element according to any one of the preceding claims, wherein the inner adapter projections (30) are distributed equidistantly or non-equidistantly around the central axis (26).

4. The filter element according to any one of the preceding claims, wherein
the second end cap (24) includes a plurality of spaced outer adapter projections (40) thereon positioned adjacent to an outer perimeter (42) of the second end cap (24), the outer adapter projections (40) each projecting in direction of the central axis (26) away from the first end cap (20).

5. The filter element according to any one of the preceding claims, wherein an axial alignment ring (44) is positioned on the second end cap (24) surrounding and being radially spaced from the inner adapter projections (30).

6. The filter element according to claim 5, wherein the alignment ring (44) is connected to the outer adapter projections (40) by radial struts (46).

7. The filter element according to any one of the preceding claims, wherein a backside (48) of the second end cap (24) is provided with a support structure (50), in particular a grid.

8. A filter system (100) comprising a housing (110) with a fluid inlet (102) formed in a first housing part (112), and a fluid outlet (108) formed in the first housing part (112), the housing (110) being closed by a second housing part (114),
a serviceable filter element (10) according to any one of the preceding claims, the filter element (10) being operably accommodated in the housing (110),
the inner adapter projections (30) of the second end cap (24) of the filter element (10) projecting into a receiver arrangement (116) on the second housing part (114) in a manner providing support for the filter element (10) at the second end (18).

9. The filter system according to claim 8, wherein the receiver arrangement (116) on the second housing part (114) being defined as a serpentine receiving groove (118) in an inner surface (120) of the second housing part (114).

10. The filter system according to claim 9, wherein the serpentine receiving groove (118) is configured as a continuous groove or spaced sections of a groove.

## Patentansprüche

1. Filterelement (10), insbesondere Luftfilterelement, umfassend
einen Filtermedienkörper (12), der einen hohlen Innenraum (14) umgibt und ein erstes Ende (16) sowie ein gegenüberliegendes zweites Ende (18) hat,
eine erste Endkappe (20), die am ersten Ende (16) des Filtermedienkörpers (12) angeordnet ist, wobei die erste Endkappe (20) eine zentrale, durch sie hindurchführende Luftströmungsöffnung (22) hat,
und
eine zweite Endkappe (24), die am zweiten Ende (18) des Filtermedienkörpers (12) angeordnet ist,
wobei die zweite Endkappe (24) eine geschlossene Endkappe ist,
wobei die zweite Endkappe (24) eine Vielzahl von beabstandeten inneren Adaptervorsprüngen (30) umfasst, die in Richtung einer Mittelachse (26) von der ersten Endkappe (20) weg ragen,
wobei zumindest ein Teil der inneren Adaptervorsprünge (30) kreisförmig um einen Mittelpunkt (28) der zweiten Endkappe (24) angeordnet ist, und
wobei die inneren Adaptervorsprünge (30) hohl sind und ein offenes Ende (39) in Achsrichtung (26) weg von der ersten Endkappe (20) umfassen,
wobei zumindest ein Teil der inneren Adaptervorsprünge (30) als gerade Platten mit einer Längserstreckung ausgebildet ist, wobei eine Projektionslinie in der Längserstreckung zum Außenumfang (42) den Außenumfang (42) schneidet.

2. Filterelement nach einem der obigen Ansprüche, wobei die inneren Adaptervorsprünge (30) mit einer Konusform versehen sind, die in Achsrichtung (26) von der ersten Endkappe (20) weg radial nach innen zeigt.

3. Filterelement nach einem der obigen Ansprüche, wobei die inneren Adaptervorsprünge (30) gleichmäßig oder ungleichmäßig um die Mittelachse (26) verteilt sind.

4. Filterelement nach einem der obigen Ansprüche, wobei die zweite Endkappe (24) eine Vielzahl von beabstandeten äußeren Adaptervorsprüngen (40) aufweist, die benachbart zu einem Außenumfang (42) der zweiten Endkappe (24) angeordnet sind, wobei die äußeren Adaptervorsprünge (40) jeweils in Richtung der Mittelachse (26) von der ersten Endkappe (20) weg vorstehen.

5. Filterelement nach einem der obigen Ansprüche, wobei ein axialer Ausrichtungsring (44) an der zweiten Endkappe (24) angeordnet ist, der die inneren Adaptervorsprünge (30) umgibt und radial von diesen beabstandet ist.

6. Filterelement nach Anspruch 5, wobei der Ausrichtungsring (44) über radiale Streben (46) mit den äußeren Adaptervorsprüngen (40) verbunden ist.

7. Filterelement nach einem der obigen Ansprüche, wobei eine Rückseite (48) der zweiten Endkappe (24) mit einer Stützstruktur (50), insbesondere einem Gitter, versehen ist.

8. Filtersystem (100), umfassend ein Gehäuse (110) mit einem in einem ersten Gehäuseteil (112) ausgebildeten Fluideinlass (102) und einem in dem ersten Gehäuseteil (112) ausgebildeten Fluidauslass (108), wobei das Gehäuse (110) durch ein zweites Gehäuseteil (114) verschlossen ist,
einem einsatzbereiten Filterelement (10) gemäß einem der obigen Ansprüche, wobei das Filterelement (10) funktionsfähig in dem Gehäuse (110) aufgenommen ist,
wobei die inneren Adaptervorsprünge (30) der zweiten Endkappe (24) des Filterelements (10) in eine Aufnahmeanordnung (116) am zweiten Gehäuseteil (114) hineinragen, so dass das Filterelement (10) am zweiten Ende (18) abgestützt wird.

9. Filtersystem nach Anspruch 8, wobei die Aufnahmeanordnung (116) am zweiten Gehäuseteil (114) als schlangenlinienförmige Aufnahmenut (118) in einer Innenfläche (120) des zweiten Gehäuseteils (114) ausgebildet ist.

10. Filtersystem nach Anspruch 9, wobei die schlangenlinienförmige Aufnahmenut (118) als durchgehende Nut oder als beabstandete Nutabschnitte ausgebildet ist.

## Revendications

1. Élément de filtre (10), en particulier élément de filtre à air, comprenant
un corps de média filtrant (12) entourant un espace intérieur creux (14) et ayant une première extrémité (16) et une deuxième extrémité opposée (18),
un premier bouchon d'extrémité (20) placé sur la première extrémité (16) du corps de média filtrant (12), le premier bouchon d'extrémité (20) ayant une ouverture centrale d'écoulement d'air (22) le traversant,
et
un deuxième bouchon d'extrémité (24) placé sur la deuxième extrémité (18) du corps de média filtrant (12),
le deuxième bouchon d'extrémité (24) étant un bouchon d'extrémité fermé,
dans lequel le deuxième bouchon d'extrémité (24) comprend une pluralité de saillies d'adaptateur internes espacées (30) sur celle-ci faisant saillie en direction d'un axe central (26) à l'opposé du premier bouchon d'extrémité (20),
dans lequel au moins une partie des saillies d'adaptateur internes (30) est disposée de manière circulaire entourant un centre (28) du deuxième bouchon d'extrémité (24), et
dans lequel les saillies d'adaptateur internes (30) sont creuses, comprenant une extrémité ouverte (39) en direction axiale (26) à l'écart du premier bouchon d'extrémité (20),
dans lequel au moins une partie des saillies d'adaptateur internes (30) sont configurées en tant que plaques droites ayant une extension longitudinale, une ligne de projection dans l'extension longitudinale vers le périmètre extérieur (42) croisant le périmètre extérieur (42).

2. Élément de filtre selon l'une quelconque des revendications précédentes, dans lequel les saillies d'adaptateur internes (30) sont pourvu d'une forme conique pointant radialement vers l'intérieur en direction axiale (26) à l'opposé du premier bouchon d'extrémité (20).

3. Élément de filtre selon l'une quelconque des revendications précédentes, dans lequel les saillies d'adaptateur internes (30) sont réparties de manière équidistante ou non équidistante autour de l'axe central (26).

4. Élément de filtre selon l'une quelconque des revendications précédentes, dans lequel le deuxième bouchon d'extrémité (24) comporte une pluralité de saillies d'adaptateur extérieures espacées (40) sur celui-ci positionnées à proximité d'un périmètre extérieur (42) du deuxième bouchon d'extrémité (24), les saillies d'adaptateur extérieures (40) faisant chacune saillie en direction de l'axe central (26) à l'écart du premier bouchon d'extrémité (20).

5. Élément de filtre selon l'une quelconque des revendications précédentes, dans lequel une bague d'alignement axial (44) est positionnée sur le deuxième bouchon d'extrémité (24), entourant les saillies d'adaptateur intérieures (30) et étant espacée radialement de celles-ci.

6. Élément de filtre selon la revendication 5, dans lequel la bague d'alignement (44) est reliée aux saillies d'adaptateur extérieures (40) par des entretoises radiales (46).

7. Élément de filtre selon l'une quelconque des revendications précédentes, dans lequel une face arrière (48) du deuxième bouchon d'extrémité (24) est pourvue d'une structure de support (50), en particulier d'une grille.

8. Système de filtre (100) comprenant un boîtier (110) avec une entrée de fluide (102) formée dans une première partie de boîtier (112), et une sortie de fluide (108) formée dans la première partie de boîtier (112), le boîtier (110) étant fermé par une deuxième partie de boîtier (114),
un élément filtrant utilisable (10) selon l'une quelconque des revendications précédentes, l'élément filtrant (10) étant logé de manière opérationnelle dans le boîtier (110),
les saillies d'adaptateur internes (30) du deuxième bouchon d'extrémité (24) de l'élément de filtre (10) faisant saillie dans un agencement de réception (116) sur la deuxième partie de boîtier (114) de manière à assurer le support de l'élément filtrant (10) au niveau de la deuxième extrémité (18).

9. Système de filtre selon la revendication 8, dans lequel l'agencement de réception (116) sur la deuxième partie de boîtier (114) est défini comme une rainure de réception sinueuse (118) dans une surface intérieure (120) de la deuxième partie de boîtier (114).

10. Système de filtre selon la revendication 9, dans lequel la rainure de réception sinueuse (118) est configurée comme une rainure continue ou comme des sections espacées d'une rainure.
